# EUROPEAN PATENT SPECIFICATION

(11) **EP 0 551 957 B1**
(45) Date of publication and mention of the grant of the patent: **11.12.1996**
(21) Application number: 93200104.3
(22) Date of filing: 15.01.1993
(51) Int. Cl.: A01J 7/00, A01K 1/12, A01K 11/00, A01J 5/007

(54) **An implement for milking animals**
Vorrichtung zum Melken von Tieren
Dispositif pour la traite d'animaux

(30) Priority: 17.01.1992 NL 9200091
(43) Date of publication of application: 21.07.1993
(73) Proprietor: C. van der Lely N.V., NL-3155 PD Maasland (NL)
(72) Inventor: van der Lely, Cornelis, CH-6300 Zug (CH); van der Lely, Ary, NL-3155 PD Maasland (NL)
(74) Representative: Mulder, Herman

(56) References cited:
- EP-A- 0 091 892
- EP-A- 0 385 539
- DE-A- 3 702 465
- US-A- 4 463 353
- Handboek voor de Rundveehouderij, 1993, Informatie en Kenniscentrum Veehouderij, Lelystad (NL), p. 249.

## Description

The invention relates to an implement for milking animals, comprising a milking parlour with a milking robot and a computer system controlling said milking robot, the milking robot being provided with means for automatically connecting teat cups to the teats of an animal and for automatically milking of the animal the implement further comprising animal-identification means, co-operating with said computer system to identify the animals.

Such an implement is known from EP-A-0091892 or DE-A-3 702 465. In the implement described in that document, the animals, which normally are in a stable or in a meadow, can randomly go to and/or enter the milking parlour, because for example they are trained to do so and receive therein some fodder. If an animal comes to the milking parlour within a predetermined time interval passed after the last time that this animal was milked, the animal is either not permitted to enter the milking parlour or, when the animal is already inside the milking parlour, is driven out of there. However, in order to optimise the milk production it can be important to get further priorities in relation to the accessibility of the milking parlour. Therefore, in accordance with the invention, the implement as described in the opening paragraph is characterized in that register means are provided for registering the lactation period of the animal, and in that the computer system further comprises a programme to ensure that the animals, which are at the beginning of a lactation period, are given priority for entering the milking parlour over animals which are not at the beginning of the lactation period. Particularly the register means may form part of the microprocessor unit of the animal-identification means, in which microprocessor unit the further relevant data for the milking process of the animal to be milked are stored.

Apart from a computer system controlling the milking robot for automatically connecting the teat cups to the teats of the udder of the animal and for automatically milking of the animal, a further computer system may be provided for feeding the animal. These measures are particularly important when a milking parlour is already provided with a computerized feeding system and has to be supplied with an automatic milking system.

At least one of both computer systems may be provided with a transceiver system for communication with a transceiver system being part of the animal-identification means. In a specific embodiment, the animal-identification means may be provided with a first microprocessor unit in which the relevant data for the fodder supply of an animal to be milked are stored, said first microprocessor unit being able to communicate with the computer system for the fodder device, and a second microprocessor unit in which the relevant data for the milking process of an animal to be milked are stored, said second microprocessor unit being able to communicate with the further computer system for controlling the milking robot and the automatic milking. Also the milking robot may be provided with a transceiver system for communicating with a transceiver system forming part of an indicator device, e.g. a display or an acoustic device or warning lights, located in- or outside the milking parlour.

For a better understanding of the invention and to show how the same may be carried into effect, reference will now be made, by way of example, to the accompanying drawings, in which:
Figure 1 is a plan view of a milking parlour comprising a milking robot, in which the outlines of an animal, in the present case a cow, are shown;
Figure 2 is a view of the milking robot, taken in the direction of arrow II-II in Figure 1;
Figure 3 is a plan view of an enlarged part of the robot arm, on which the teat cups are disposed;
Figure 4 is a side view, taken in the direction of arrow IV in Figure 3;
Figure 5 is a plan view in accordance with Figure 3, in which is schematically shown the position of the teat cups relative to the robot arm and their connection thereto during milking of an animal;
Figure 6 is a side view, taken in the direction of arrow VI in Figure 5;
Figure 7 is a cross-sectional view, taken on line VII-VII in Figure 3;
Figure 8 is a side view in accordance with Figure 6 of an alternative design of the connection of the teat cups to the robot arm;
Figure 9 is a schematic plan view in accordance with Figure 1 of a design, in which the milking robot also includes a cleaning implement for the teats of the cow;
Figure 10 is a rear view of a milking parlour, provided with a semi-automatic milking implement, and
Figure 11 is, to a different scale, a schematic plan view of the milking implement of Figure 10.

In the drawings, corresponding components have been given the same reference numerals. The invention is in no way limited to the embodiments illustrated and described here; they only serve as an illustration of the inventive idea.

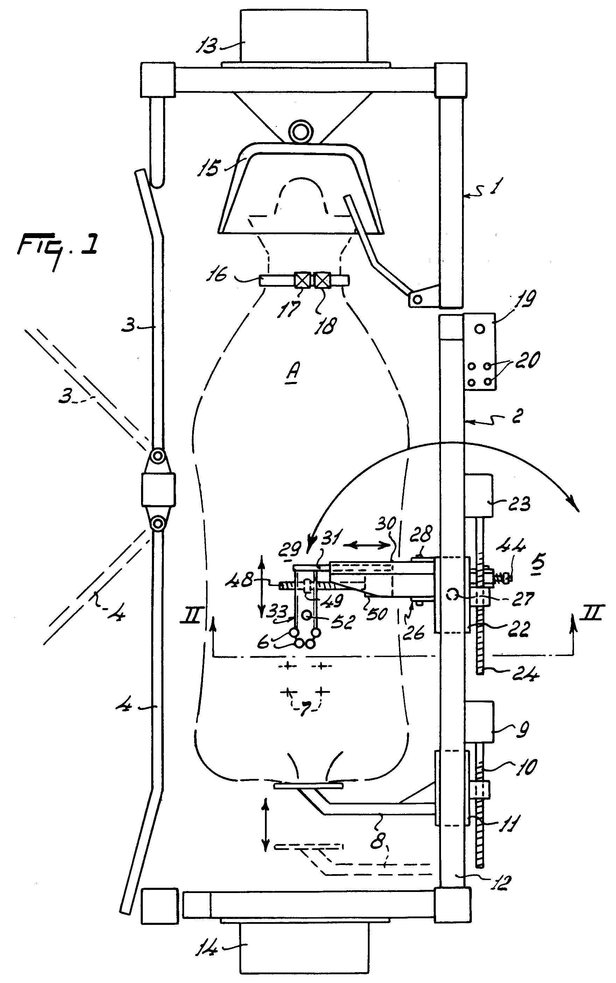

Figure 1 shows a milking parlour in which, inside a railing consisting of the front railing portion 1, the rear railing portion 2 and the railing doors 3 and 4, an animal, in the present case a cow A, is present. The milking parlour includes a milking robot 5, by means of which the teat cups 6 can be connected to the schematically shown teats 7 of the udder of the cow A. For a rough determination of the starting position, the milking robot co-operates with a contacting member 8. The contacting member 8 can be moved with the aid of a stepper motor 9, a threaded spindle 10 connected thereto and a straight guide member 11 to over a horizontal carrier 12 which forms part of the rear railing portion 2. Such a carrier 12 can alternatively be provided against or next to an existing railing. The milking parlour comprises a computer system 13 which controls an automatic feeder. The computer system 13 of the automatic feeder operates independently of a computer system 14 for the milking robot and, each time it detects, identifies and moreover accepts an animal A in the milking parlour, it can deposit a quantity of fodder matched to the animal in a feed trough 15 attached to the front railing portion 1.

The animal is provided with a collar 16, to which two separate indication and information members 17 and 18 are attached. These members each separately supply control signals to the two computer systems 13, 14 and contribute to an independent action of both computers. The milking parlour is further provided with an indicator device 19 for measuring the milk flow coming from a teat 7 of the udder of the animal A. For each of the teats a warning light 20 is present, which lights up when it is determined via a sensor in a teat cup 6 or in the milk line 21 of a cup 6 that the milk flow has stopped or decreased to below a predetermined value. The indicator device 19 may alternatively be designed such that it has two warning lights for the milk flow from each teat 7, one warning light emitting green light during milking and the other one emitting red light when the milk flow from a related teat has decreased to below the preset threshold value. In a still further design, the indicator is an acoustic device in the form of a buzzer.

In the longitudinal direction of the milking parlour, i.e. in the direction of the imaginary line between head and tail of the animal A in the milking parlour, the milking robot 5 is slidably disposed on a horizontal carrier 12 which forms part of the rear railing portion 2. For that purpose, the milking robot 5 comprises a straight guide member 22, a stepper motor 23 driving a threaded spindle 24, which engages the straight guide member 22. The stepper motor 23 is controlled by the computer 14 of the milking robot.

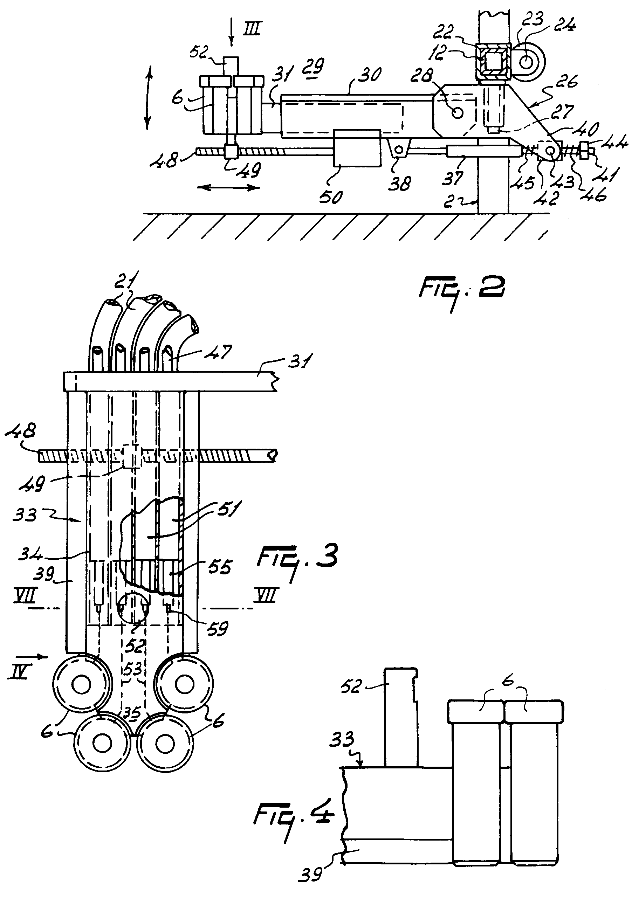

Figure 2 shows at the bottom side of the straight guide member 22 a holder 26 which is arranged pivotably about a vertical shaft 27 connected to the straight guide member 22. A telescopic arm 29, consisting of a rigid portion 30 and a portion 31 slidable therein, is attached to the holder 26 capably of pivoting about a horizontal shaft 28. A carrier member 33 for the teat cups 6 is disposed at a square angle on the end of the slidable arm portion 31. The teat cups 6 are, seen in plan view, arranged in a V-form on the carrier member 33. The carrier member 33 includes a chamber portion 34 and a contacting member portion 35, which in this construction are one integral whole. The slidable arm portion and the teat cups attached thereto can be moved relative to the rigid arm portion 30 with the aid of a threaded spindle 48 which meshes with a threaded element 49 at the bottom side of the carrier member 33. The threaded spindle 48 is driven by a stepper motor 50, which is controlled by the computer system 14 of the milking robot 5.

Relative to the holder 26, the arm 29 is supported and activated pivotably by means of an adjusting cylinder 37. The piston rod thereof acts near the midway point of the rigid arm portion 30 on a horizontal shaft 38 connected between two lugs to the rigid arm portion. The adjusting cylinder 37 is located in the extension of the arm 29 and, in this situation, extends under the end of the vertical shaft 27 to a holder arm 40 of the holder 26. The cylinder portion of the adjusting cylinder 37 is supported relative to the holder arm 40 via a rod 41 which is provided in the extension of the cylinder and is passed through a bore in a block 42, which block 42 is connected pivotably to the holder arm 40 via horizontal stub axles 43. The end of the sliding rod 41, which is provided with thread, is fitted with an adjusting nut 44. Disposed between the cylinder portion of the adjusting cylinder 37 and the block 42 is a pressure spring 45, and a second pressure spring 46 is disposed between the adjusting nut 44 and the block 42.

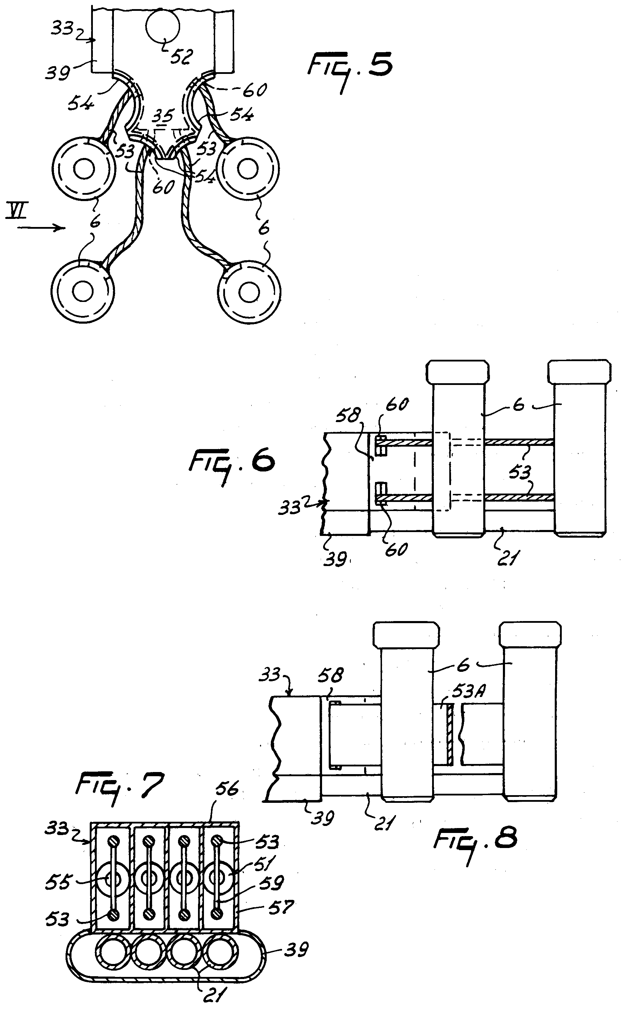

Figures 3 and 4 show a laser device 52 on the carrier member 33. The computer of the milking robot 5 determines the position of the carrier member 33, and consequently the position of the teat cups 6, with the aid of a laser device 52 which is disposed on the carrier member 33, projects to over the teat cups and supplies the computer 14 with signals on the basis of reflected radiation, so that the position of the teats 7 with respect to the carrier member 33 can be determined. The laser device 52 is positioned, seen with respect to the udder of the animal A near the teat cups arranged at the head end of the animal, on an imaginary perpendicular centre line, directed transversely to the arm 29, between the four teat cups. The leading teat cups 6 are spaced apart from each other by a smaller distance than the trailing pair of teat cups, so that each centre of a teat cup 6 indicates a point for the lines of an imaginary arrow tip which, in a plan view, is directed towards the udder.

In the chamber portion 34 of the carrier member 33 there are located, at a square angle to the arm 29, four rigidly arranged cylinders 51 which are pneumatically or hydraulically operable via supply lines 47. Connected to the piston rod 55 of each of the cylinders 51 is a flexible member 53, 53A, which is connected to a teat cup 6. In the rest position, the piston rod 55 of a cylinder 51 is retracted that far that a teat cup 6 is pulled up against a plane of contact 54 on the contacting portion 35 of the carrier member 33.

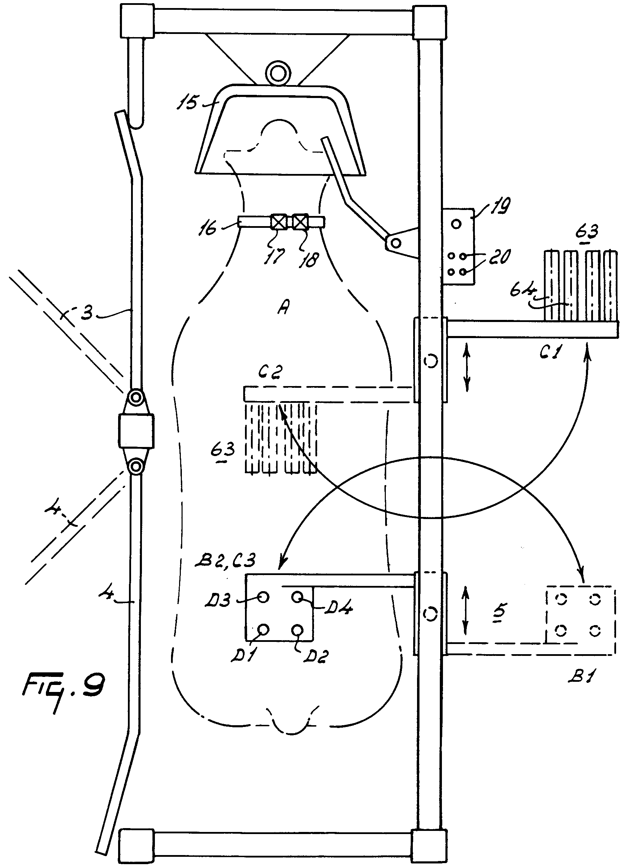

Figures 5, 6 and 8 show the configuration of the teat cups 6 during milking. In these drawings, the flexible member 53, 53A is not tightened, so that the milked animal A can move free from and to the robot arm 30. A plane of contact 54 has a curvature which at least substantially corresponds to the circumferential curvature of a teat cup 6. A plane of contact 54 is provided on the carrier member 33, which is in the form of an approximately square tube 34. The flexible member 53, 53A is preferably disposed between upright walls of the tube, so that, when it is tightened, a stable contact of the cup 6 with the contacting portion 35 is obtained in all circumstances. In the present embodiment, the plane of contact 54 is constituted by a wall 58 which closes the tube 34 and in which one or a plurality of apertures 60 for the flexible member 53, 53A are made. The apertures 60 are of a conical shape, so that the flexible member 53, 53A can smoothly be pulled through the apertures 60 at different angles. A flexible member 53, 53A is connected to a piston rod 55 via an intermediate member 59. The intermediate member may have the shape of an isosceles triangle, the intermediate member 59 being connected to the piston rod 55 near the apex angle of the said triangular shape. In accordance with a first design as shown in Figure 6, a flexible member can consist of two cables or cords 53 of a suitable flexible material, which cables 53 have one end connected in a lateral direction, i.e. to an upright wall of a teat cup 6. The other end may be attached to the intermediate member 59. In accordance with an alternative design as shown in Figure 8, the flexible member consists of a strip or belt 53A which extends in an upwardly directed plane.

Figure 7 shows, in a cross-sectional view, at the bottom side of the bottom wall 57 of the carrier member 33 a flattened tube 39, through which for the purpose of protection the milk hoses 21 of the teat cups 6 are passed. Such a tube 39, through which also further lines may be passed, prevents the robot arm 29 from being caught on obstacles, if any, by means of its lines and wires.

Although the teat cups 6 can be held against or onto the carrier member 33 by means of the cylinders 51, they can also be held against or onto the carrier member 33 by means of on/off switchable electromagnets. These electromagnets are mounted on the carrier member, e.g. near the planes of contact 54, and are individually operable. Particularly, they can be switched on together, while they can be switched off individually. The electromagnets work together with the cylinders 51. The cylinders 51 are able to pull up the teat cups 6 against or onto the carrier member 33 by means of one or more cables 53 or by means of the belt 53A, while the electromagnets are able to hold the teat cups against or onto the carrier member 33. With the aid of the computer 14, control signals can be generated which cause an off-switching of the electromagnet for a relevant teat cup 6 when said teat cup is to be attached to a teat, and an on-switching of said electromagnet when this teat cup has to be uncoupled from the relevant teat and be reconnected to the carrier member 33. The control signals can also provoke an activating of the cylinder 51 of this teat cup 6 for a predetermined time interval as soon as the teat cup 6 has to be uncoupled from said teat. After an electromagnet for a relevant teat cup is switched off, said teat cup is moved upwardly and sucked around a respective teat by means of a partial vacuum generated in said teat cup 6.

Figure 9 shows a milking parlour in which a cow A is present, the milking implement comprising apart from the milk robot 5 a teat-cleaning device 63 with cleaning elements 64 for cleaning the teats of the animal to be milked. The milk robot 5 and the cleaning device 63 are displaceably mounted on a guide member arranged at one of the longitudinal sides of the milk box or milking parlour, while the carrier member 33 as well as the cleaning elements 64 are rotatable about an upwardly directed axis from a position outside the milk box into a position under the animal. The direction of rotation of the carrier member from the rest position is opposite to the direction of rotation of the cleaning elements 64 from the rest position. From their respective rest positions, the carrier member 33 and cleaning elements 64 are able to follow circle-like curves to move through a foremost and a hindmost leg, the first part of which curves being directed opposite to each other. The robot does not only milk the cow A, but first cleans her teats 7. When the cow A enters the milking parlour through the entrance door 3, the teat cups 6 are in position B1 and the teat-cleaning device 63 is in position C1. As soon as the cow A has entered the milking parlour, the teat cleaner 63 rotates through 180° to the position C2. Thereafter the cleaning device 63 moves along the horizontal carrier 12 to position C3. During these motions, the cleaning device 63 is at a somewhat lower level than the horizontal carrier 12, so that it can pass under it in an advantageous manner. The teats are cleaned in the position C3. Thereafter the cleaning device moves again to the position C2 and the teat cups automatically move from position B1 to position B2, the latter position corresponding to the position C3 of the cleaning device 63. The laser detector 52, or a different type of detector, determines the position of the teats 7, whereafter the teat cups are automatically coupled thereto. Immediately after the cow A has been milked, the teat cups 6 return to position B1 and, after a further cow A has arrived in the milking parlour, the teat cleaning device 63 moves again to position C3 and the procedure described is repeated.

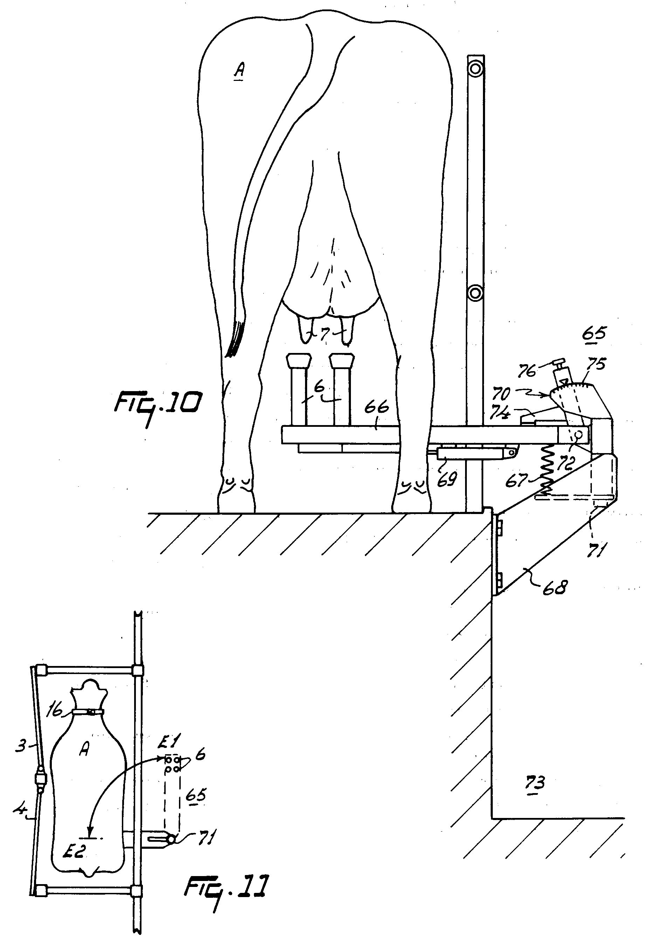

Figure 10 is a rear view and Figure 11 a reduced plan view of the milking parlour, in which a manually operated milking machine 65 is provided against the wall of an operator's pit 73. In this situation, the teat cups 6, as was also the case with the milking robot 5 already described, are disposed on an approximately horizontally extending arm 66 which is movable in all directions. The arm 66 is upwardly pivotal about a shaft and is flexibly attached to a holder 68 by means of a pusher spring 67 bearing thereon. Because of this support, the teat cups 6 are easily couplable to the teats 7. When a teat 7 does not produce milk any more, the underpressure in the relevant teat cup 6 will be automatically stopped. This promotes a low somatic cell count of the milk and the risk of mastitis is reduced.

The pneumatic cylinders 69 which uncouple the teat cups 6 from the teats 7 when the milk flow stops or decreases to below a predetermined preset value, are provided under the horizontal carrier arm 66. The height of the arm 66 carrying the cups 6 is adjustable by means of a locking member 70 which comprises a pressure member 74 and is also pivotal about the shaft 72. The arm 66 is further mounted such that it is rotatable about a vertical shaft 71. As is shown in Figure 11, the arm can be moved from a rest position E1 to an operative position E2, which corresponds to C2 and C3 in Figure 9. The locking member 70 has a serrated edge 73 which is rigid but can pivot together with the arm 66 about the upwardly extending shaft 71, into which edge a pawl 76 is drawn and locked there by a (non-shown) tension spring. The arm 66 with teat cups 6 is simultaneously locked thereby at the proper height. So as to be able to connect the cups 6 to the teats 7, the arm 66 can be pivoted about the vertical shaft 71 to under the udder in the position E2. Thereafter, if desired, the height can be adapted in a simple manner by lifting the pawl 76, whereafter the pusher spring 67 pushes the arm 66 and the cups 6 upwards. Lowering the arm 66 only requires a light manual pressing of the arm 66. If the arm 66 is at a suitable height under the udder, the farmer has both arms free for the connection of the cups 6, whilst the entire connection procedure is significantly less burdening for the farmer than with the milking claws which have been customary sofar. The connecting method as well as the feature that teat cups can be connected with two hands offer a farmer the opportunity of raising his output considerably.

If the teat cups 6, as shown, have been connected during milking in an upwardly directed position to the carrier arm 66, it is not absolutely necessary to uncouple the teat cups 6 from the teat, when the milk flow stops. Without the presence of underpressure in the teat cup, the teat cup 6, while resting on a preferably dish-like seat in a plateau at the end of the arm 66, might remain connected to or near the teat until all four teat cups 6 have ended their milking action.

The method of operation of the milking robot will now be described hereinafter.

The carrier member has four teat cups 6 which are connected to a carrier member 33 via flexible members 53, 53A. Taken in a direction from the rear, from left to right the teats might be numbered as follows: rear left D1, rear right D2, front left D3 and front right D4.

After the location of the teats 7 has been determined by the laser device 52 or another type of detector, the cups 6 move to the udder of the animal A. The teat cup for teat D1 is, for example, connected first. As soon as the cup 6 has been connected to the teat 7 and the milking operation has started, the air pressure in the pneumatic adjusting cylinder 51 of this teat cup 6 stops and the teat cup 6 then becomes freely movable relative to the carrier member 33. If an electromagnet has been used for the connection, the electric current is at that moment switched off from the electromagnet. Thereafter the carrier member 33 automatically moves to teat D2, where the same action occurs. This coupling method is repeated also for the teats D3 and D4. During milking, the teat cups 6 are flexibly connected to the robot arm 29 by means of the milk hoses 21 and the flexible members 53, 53A. This flexible connection is advantageous for the milk yield. The flexibility of the teat cup 6 connected to the teat 7 is still further increased if the robot arm 29 is moved by one or more hydraulic or pneumatic cylinders and if the pressure on the oil or of the air in the cylinders, which determine the location of the robot arm, is removed. Very advantageously, the connected teat cups 6 can also move in all directions in this manner.

In addition, the free motion of a connected teat cup 6 is promoted by the light and possibly flexible material, of which the carrier member 33 and the robot arm 29 have been made. The weight of this material is low and the mass forces are low.

When a teat 7 does not or practically not produce milk any more, the underpressure in the teat cup 6 automatically disappears and simultaneously or substantially simultaneously the flexible members 53, 53A pull the teat cup 6 into its seat, i.e. its plane of contact 54, at the carrier member 33. This rapid drop of the underpressure in the teat cup 6 and the withdrawal of the teat cup are beneficial to a low somatic cell count of the milk. The risk of illnesses, such as mastitis, is reduced thereby and milking is more agreeable to the animal. After all the teats have been milked, the robot arm rotates through approximately 180° to a position outside the milking station and the cow can leave the milking parlour.

A computer 13, which controls the feeding system and makes any further information available, is disposed near the feed trough. This computer 13 can, for example, control the quantity of fodder served to the cow in the feed trough. The cow has a collar 16 which forms part of cow-identification means. Two indication-information members 17, 18 are attached to the collar 16 of the cow A. The one information member co-operates with the computer-controlled feeding system. The other information member co-operates with the computer 14, which is provided near the rear side of the cow A and manages the process control of the milking robot 5. When the feeding system and the milking system comprising the said milking and cleaning devices 5, 63, 65 and the computer 14, are mounted completely or partly separately, the advantage is obtained that supplies and repair operations of the individual systems are easier to perform and an automatic milking system can be used in a simple manner in addition to an existing feeding system. The cow-identification means are provided with a first microprocessor unit in which the relevant data for the fodder supply of an animal to be milked is stored, a second microprocessor unit in which the relevant data for the milking process of an animal to be milked is stored and with a transceiver system. The indication-information member 17 includes the first microprocessor unit with the transceiver system and is able to communicate with the transceiver system of the computer system for feeding the animal. The indication-information member 18 includes the second microprocessor with the first mentioned transceiver system and is able to communicate with the transceiver system of the computer system for controlling the milking robot 5 and the automatic milking. The pressure springs 45, 46 provided in the robot arm produce a flexible up and down motion, whereby the weight of a teat cup 6 and carrier member 33 is reduced. The up and down motion of the teat cup 6 can, as shown, be effected pneumatically. Furthermore, a stepper motor can adjust the length of the telescopic robot arm 29. The stepper motor structures can be replaced by hydraulic or pneumatic cylinders or suchlike structures. By means of the above-described straight guide members 22, 29 provided along and transversely to the milking parlour and by the pivotal motion about the shaft 28, a teat cup 6, mounted at the end of the robot arm, can be moved upwardly, downwardly and laterally and at the same time in all directions, after activation of the relevant stepper motor and/or adjusting cylinder.

The milking implement can still function adequately if two teats of the cow are adjacent to each other spaced apart by only a few centimetres, e.g. 2 cms, as, for example, the rearmost teat cups D1 and D2 are located in the initial position very closely to each other on their carrier member 33. This arrangement is important for a milking robot 5 which must always operate, also during the night, without any supervision.

The constructions described in the description can usually be used with great advantage in an automatically operating milking robot, but also in a completely or partly manually operated milking implement 65.

The milking implement, comprised of a number of teat cups 6 which are connectable to a number of teats 7 of an animal, such as a cow A, is preferably used in a stable with freely moving cows or a similar such accommodation. The milking system comprising the said milking and cleaning implements and the computer 14, and the feeding system can then be of an automatic type and be designed such that the computers 13, 14 controlling the milking system and the feeding system allow a cow to enter the milking parlour, in accordance with the sequence in which she is recorded in the computer.

In addition, the milking system and the feeding system can be automated and designed such that the computers 13, 14 controlling the milking system and the feeding system ensure that a cow which is at the beginning of a lactation period is given priority, as regards her entrance to the milking parlour, over cows which are at the end of the lactation period. Therefore, the implement is provided with register means for registering the lactation period of the animals. Particularly, these register means are forming part of the second microprocessor unit of the cow-identification means, in which microprocessor unit the further relevant data for the milking process of the animal to be milked is stored. The computer system for controlling the milking robot comprises a special programme to ensure that the animals which are at the beginning of a lactation period are given priority for entering the milking parlour over animals which are not at the beginning of the lactation period.

The milking system and the feeding system may also be of such an automated construction and so designed that the computers 13, 14 controlling the milking system and the feeding system allow cows A into the milking parlour in accordance with serial numbers such as A1, A2, A3, A4, A5 etc., assigned to the cows A.

It is furthermore possible to milk a cow A in a stable with freely moving cows or a similar accommodation automatically, independently of an optional recording in a computer 14 controlling the system of the instant at which each cow was milked and independently of a predetermined period of time elapsed since the cow was milked last.

The invention is not limited to the features described in the foregoing with reference to the accompanying drawings, but also relates to all the details which have not been described but are shown in the drawings and defined in the claims. The invention also relates to all sorts of modifications of the embodiment, of course being within the protective scope of the accompanying claims.

## Claims

1. An implement for milking animals, comprising a milking parlour with a milking robot (5) and a computer system (14) controlling said milking robot (5), the milking robot (5) being provided with means for automatically connecting teat cups (6) to the teats of an animal and for automatically milking of the animal, the implement further comprising animal-identification means, co-operating with said computer system (14) to identify the animals, characterized in that register means are provided for registering the lactation period of the animal, and in that the computer system (14) further comprises a programme to ensure that the animals, which are at the beginning of a lactation period, are given priority for entering the milking parlour over animals which are not at the beginning of the lactation period.

2. An implement as claimed in claim 1, characterized in that the register means are forming part of the microprocessor unit of the animal-identification means, in which microprocessor unit the further relevant data for the milking process of the animal to be milked are stored.

3. An implement as claimed in claim 1 or 2, characterized in that, apart from the computer (14) for controlling the milking robot and for the automatic milking of the animal, a further computer system (13) is provided for feeding the animal.

4. An implement as claimed in claim 3, characterized in that at least one of both computer systems (13, 14) is provided with a transceiver system for commmunication with a transceiver system being part of the animal-identification means.

5. An implement as claimed in claim 4, characterized in that the animal-identification means are provided with a first microprocessor unit in which the relevant data for the fodder supply of an animal to be milked are stored, said first microprocessor unit being able to communicate with the computer system for the fodder device, and a second microprocessor unit in which the relevant data for the milking process of an animal to be milked are stored, said second microprocessor unit being able to communicate with the further computer system for controlling the milking robot (5) and the automatic milking.

6. An implement as claimed in claim 4 or 5, characterized in that the milking robot (5) is provided with a transceiver system for communicating with a transceiver system forming part of an indicator device, e.g. a display or an acoustic device or warning lights, located in- or outside the milking parlour.

## Patentansprüche

1. Vorrichtung zum Melken von Tieren, die einen Melkstand mit einem Melkroboter (5) und einem Rechner (14) aufweist, der den Melkroboter (5) steuert, welcher eine Vorrichtung zum automatischen Anschließen von Zitzenbechern (6) an die Zitzen eines Tieres und zum automatischen Melken des Tieres aufweist, wobei die Melkvorrichtung ferner eine Tieridentifizierungs-Einrichtung aufweist, die zum Identifizieren der Tiere mit dem Rechner (14) zusammenwirkt,
dadurch gekennzeichnet, daß eine Registriereinrichtung zum Registrieren der Säugeperiode des Tieres vorgesehen ist, und daß in dem Rechner (14) ferner ein Programm gespeichert ist, das sicherstellt, daß die am Anfang einer Säugeperiode stehenden Tiere gegenüber nicht am Anfang der Säugeperiode stehenden Tieren den Melkstand bevorzugt betreten können.

2. Vorrichtung nach Anspruch 1,
dadurch gekennzeichnet, daß die Registriereinrichtung Teil des Mikroprozessors der Tieridentifizierungs-Einrichtung ist, wobei in dem Mikroprozessor die weiteren relevanten Daten für das Melken des zu melkenden Tieres gespeichert sind.

3. Vorrichtung nach Anspruch 1 oder 2,
dadurch gekennzeichnet, daß außer dem Rechner (14) zum Steuern des Melkroboters und zum automatischen Melken des Tieres ein weiterer Rechner (13) zum Füttern des Tieres vorgesehen ist.

4. Vorrichtung nach Anspruch 3,
dadurch gekennzeichnet, daß mindestens einer der beiden Rechner (13, 14) ein Sende-Empfangs-Gerät aufweist, das mit einem Sende-Empfangs-Gerät der Tieridentifizierungs-Einrichtung zur Nachrichtenübertragung zusammenwirkt.

5. Vorrichtung nach Anspruch 4,
dadurch gekennzeichnet, daß die Tieridentifizierungs-Einrichtung einen ersten Mikroprozessor aufweist, in dem die relevanten Daten für die Futterzufuhr zu einem zu melkenden Tier gespeichert sind, und der zur Nachrichtenübertragung mit dem Rechner für die Futtervorrichtung zusammenwirkt, und daß ein zweiter Mikroprozessor vorgesehen ist, in dem die relevanten Daten für das Melken eines zu melkenden Tieres gespeichert sind, und der zur Nachrichtenübertragung mit dem weiteren Rechner zum Steuern des Melkroboters (5) und des automatischen Melkvorganges zusammenwirkt.

6. Vorrichtung nach Anspruch 4 oder 5,
dadurch gekennzeichnet, daß der Melkroboter (5) ein Sende-Empfangs-Gerät aufweist, das zur Nachrichtenübertragung mit einem Sende-Empfangs-Gerät zusammenwirkt, welches Bestandteil einer Anzeigeeinrichtung ist, die beispielsweise durch ein Display, eine akustische Einrichtung oder durch Warnlampen gebildet ist, die innerhalb oder außerhalb des Melkstandes angeordnet sind.

## Revendications

1. Dispositif pour la traite d'animaux, comprenant une stalle de traite avec un robot trayeur (5) et un système informatique (14) commandant ledit robot trayeur (5), le robot trayeur (5) étant muni de moyens pour relier automatiquement des godets de trayons (6) aux trayons d'un animal et pour traire l'animal automatiquement, le dispositif comprenant en outre des moyens pour identifier un animal, coopérant avec ledit système informatique (14) pour identifier les animaux,
**caractérisé** en ce que des moyens d'enregistrement sont prévus pour enregistrer la période de lactation de l'animal, et en ce que le système informatique (14) comprend en outre un programme pour assurer que les animaux qui sont au début d'une période de lactation reçoivent priorité pour entrer dans la stalle de traite, de préférence aux animaux qui ne sont pas au début de la période de lactation.

2. Dispositif selon la revendication 1, caractérisé en ce que les moyens d'enregistrement font partie de l'unité à microprocesseur des moyens d'identification des animaux, dans laquelle unité à microprocesseur les autres données pertinentes pour l'opération de traite de l'animal à traire sont mises en mémoire.

3. Dispositif selon la revendication 1 ou 2, caractérisé en ce qu'en dehors de l'ordinateur (14) pour commander le robot trayeur et pour la traite automatique de l'animal, un autre système informatique (13) est prévu pour nourrir l'animal.

4. Dispositif selon la revendication 3, caractérisé en ce qu'au moins un des deux systèmes informatiques (13, 14) est muni d'un système émetteur-récepteur pour communiquer avec un système émetteur-récepteur faisant partie des moyens pour identifier un animal.

5. Dispositif selon la revendication 4, caractérisé ence que les moyens pour identifier un animal sont munis d'une première unité à microprocesseur dans laquelle les données pertinentes pour la fourniture de fourrage à un animal à traire, sont mises en mémoire, ladite première unité à microprocesseur étant capable de communiquer avec le système informatique pour le dispositif d'affourragement, et d'une deuxième unité à microprocesseur dans laquelle les données pertinentes pour l'opération de traite d'un animal à traire sont mises en mémoire, ladite deuxième unité à microprocesseur étant capable de communiquer avec l'autre système informatique pour commander le robot trayeur (5) et la traite automatique.

6. Dispositif selon la revendication 4 ou 5, caractérisé en ce que le robot trayeur (5) est muni d'un système émetteur-récepteur pour communiquer avec un système émetteur-récepteur faisant partie d'un dispositif indicateur, par exemple un affichage ou un dispositif acoustique ou des lumières avertisseuses, situées dans la stalle de traite ou en dehors de celle-ci.
